# EUROPEAN PATENT SPECIFICATION

(11) **EP 3 393 251 B1**
(45) Date of publication and mention of the grant of the patent: **27.01.2021**
(21) Application number: 16826770.6
(22) Date of filing: 21.12.2016
(51) Int. Cl.: A21B 1/26, F24C 15/32, F23C 3/00, F23D 14/24

(54) **OVEN**
OFEN
FOUR

(30) Priority: 21.12.2015 IT UB20159610
(43) Date of publication of application: 31.10.2018
(73) Proprietor: SATENGINEERING S.A.S. DI FRANCESCO D'URSI & C., 10138 Torino (TO) (IT)
(72) Inventor: D'URSI, Francesco, 10138 Torino (TO) (IT)
(74) Representative: Brunacci, Marco
(86) International application number: PCT/IB2016/057864
(87) International publication number: WO 2017/109717

(56) References cited:
- EP-A2- 0 809 078
- EP-A2- 1 843 101
- WO-A1-2011/120597
- DE-A1- 19 539 856

## Description

### Technical field

The present invention relates to a convection oven, for the cooking with hot air and/or steam preferably of foods, in the community, industrial and domestic kitchens.

### Background Art

As is known, these ovens can cook food with steam produced in indirect or direct form.

In the first case, the oven has autonomous steam generating means (boiler-water heater) which are arranged outside of the cooking chamber and, when the water is brought to the boiling point in the boiler, the steam is conveyed into the cooking chamber of the oven.

In the second case, the steam is generated directly in the cooking chamber by means of water dispensing means on the heating elements such as electric resistors or heat exchangers which are heated by the fumes at a certain temperature of gas fuel burners.

In a third case, the oven is equipped with both autonomous steam generating means (boiler-water heater) and water dispensing means on the heating elements, in which both systems operate alternately or simultaneously, depending on the cooking requirements, to produce further amount of steam inside the cooking chamber.

In this regard it is specified that, all convection ovens require heat sources that allow heating the volume of air inside the cooking chamber and consequently obtaining the cooking of food.

The air is heated by means of the same electric resistors or heat exchangers which, as said, can produce the steam during steam cooking.

A fan around which the heat exchangers or the resistors are wound moves the air in the chamber so as to promote uniform cooking.

Most of the ovens of known type that use electricity to produce heat make use of circular resistors formed by several branches in the shape of concentric circles distant some millimeters from one another.

The use of circular resistors supplied electrically allows occupying relatively little space compared to the total size of a cooking chamber.

These ovens of known type have the major drawback linked to the high absorption of electrical power to the detriment of energy saving.

Moreover, in a professional kitchen the absorbed electrical power increases considerably as well as the costs for the realization of the electrical installations. Moreover by using electricity during direct steam cooking, the surface used to atomize water is very small and this does not facilitates the production of large quantities of steam in short times.

In this case, the heating elements cool off when they are hit by water and the steam quality suffers from this.

The known ovens that use burners of gaseous fuel to produce heat employ two types of burners:
- atmospheric, in which the comburent air is sucked in a natural way through a mixer that exploits the Venturi effect;
- premixed blown, with or without metal fiber, in which the comburent air is produced by a fan and is forcibly mixed in a mixer upstream of the burner.

It is known that the burners of blown type are preferable to atmospheric burners for their best thermal efficiency, since they involve lower fuel consumption and prevent unnecessary heat loss.

Moreover the blown burners can reach much higher thermal powers and are safer than the atmospheric ones as far as the hazard of carbon monoxide poisoning is concerned.

Both burner types are suitably connected to a heat exchanger which is inside the cooking chamber, in which a fan facilitates the thermal exchange.

These exchangers occupy greater space than the electric resistors and are made up of tubes having various diameters, normally more than 30 mm, so as to allow the flame to stay on in a stable manner.

A first drawback of such blown burners with heat exchangers is related to the poor modulation field and stability of the flame and excessive emission of CO (carbon monoxide) and NOx (nitrogen monoxide and dioxide).

Another drawback of blown burners with heat exchangers is related to the excessive noise pollution linked to the operation thereof.

Still another drawback of blown burners with heat exchangers is related to the high manufacturing costs, especially when the solution is adopted of covering the burner head with metal fiber.

This solution is adopted to facilitate the combustion higher on the surface of the burner head and make the radiating-pattern mesh operate at low thermal loads and so as to mitigate the previously described problems.

In the most common burners used in the technical field it is very difficult to avoid the phenomenon of "backfire" and also that of "flame detachment", especially when the pressures, flow rates and type of combustible gas vary.

The phenomena of "backfire" and "flame detachment" occur when the balance changes between the speed of outflow of the comburent air-gas mixture and that of flame propagation. Relevant prior art can be found in the documents DE19539856, EP1843101 and WO 2011/120597.

### Description of the Invention

The main aim of the present invention is to provide a cooking oven which allows avoiding the formation of potentially dangerous explosive mixtures during combustion.

One object of the present invention is to provide a cooking oven comprising a burner of small size with a broad modulation range and low and stable emissions at all operating powers.

A further object of the present invention is to provide a cooking oven which allows generating a flame of great power which remains stably lit in small volumes of air.

Another object of the present invention is to provide a cooking oven which allows reducing energy consumption, maximizing production capacity, thus obtaining a better environmental impact than the gas appliances of known type. Another object of the present invention is to provide a cooking oven which allows overcoming the mentioned drawbacks of the prior art within the ambit of a simple, rational, easy, effective to use and affordable solution.

The aforementioned objects are achieved by the present cooking oven having the characteristics of claim 1.

### Brief Description of the Drawings

Other characteristics and advantages of the present invention will become better evident from the description of a preferred, but not exclusive, embodiment of a cooking oven, illustrated by way of an indicative, but non-limiting, example in the accompanying drawings, wherein:

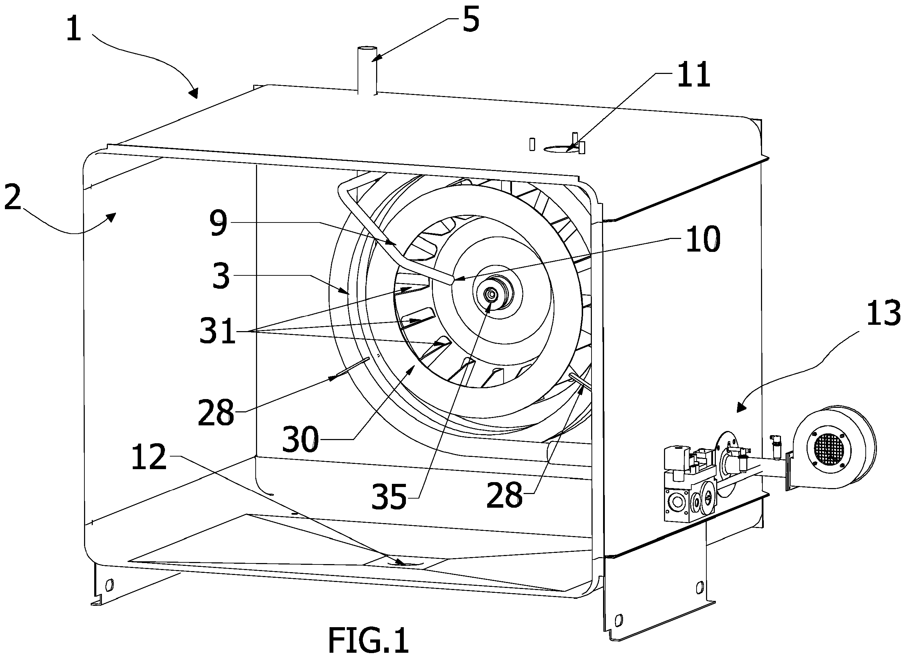

Figure 1 is a perspective view of the cooking oven according to the invention;

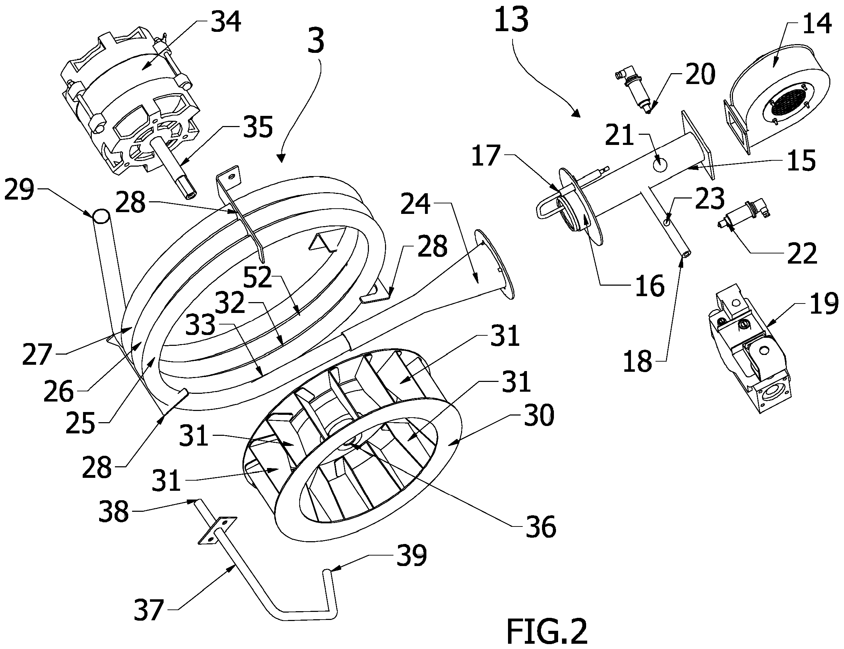

Figure 2 is an exploded view of the heat exchange means and of the burner means of the cooking oven according to the invention;

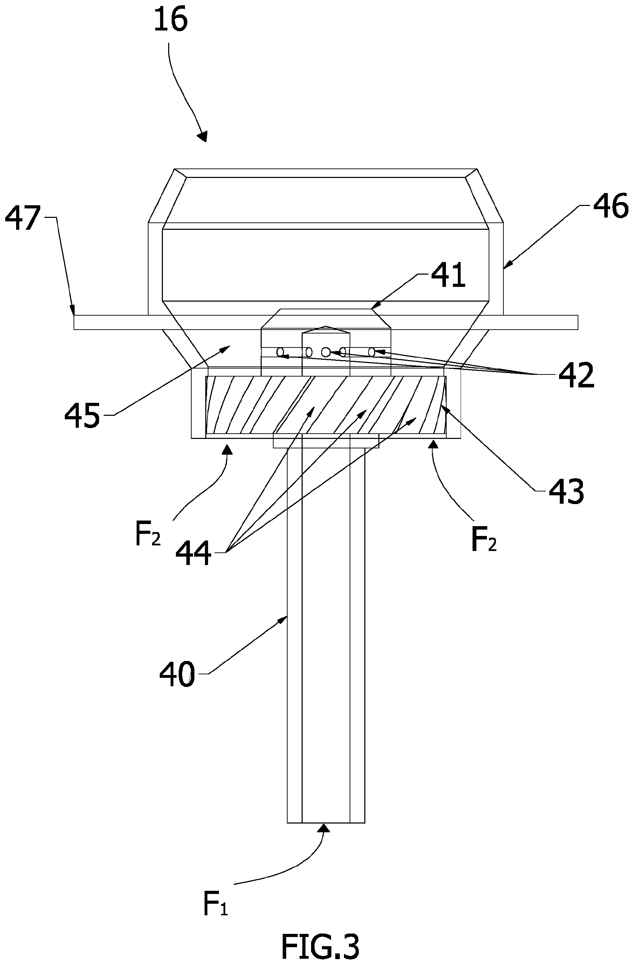

Figure 3 is a side view of a detail of the burner of the cooking oven according to the invention;

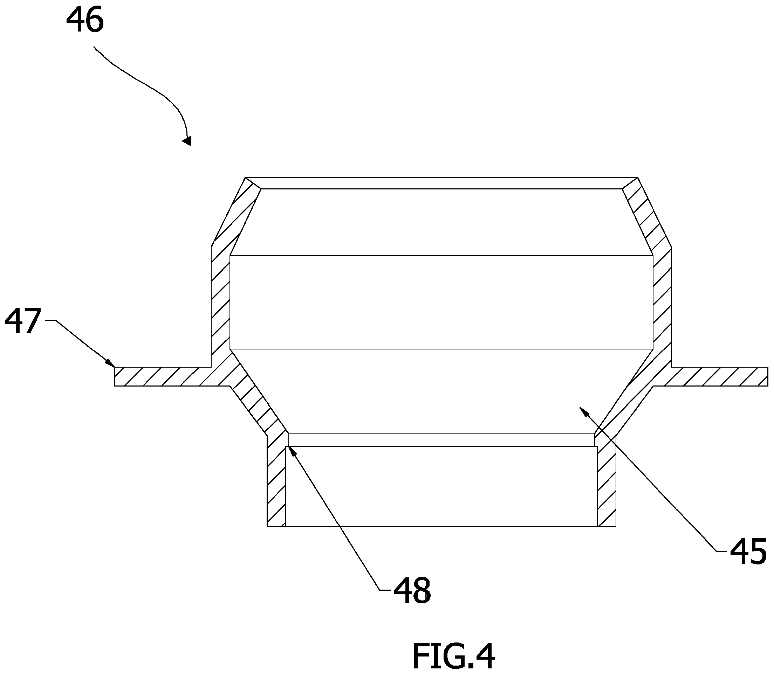

Figure 4 is a sectional view of a detail of the cooking oven according to the invention;

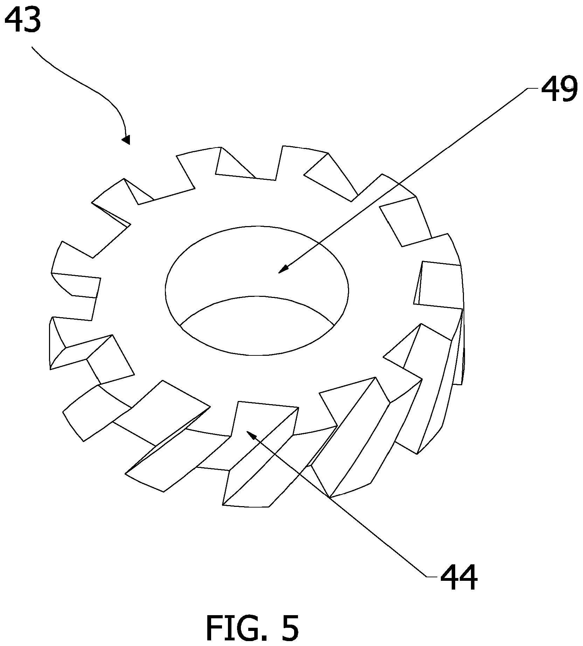

Figure 5 is a perspective view of a detail of the cooking oven according to the invention;

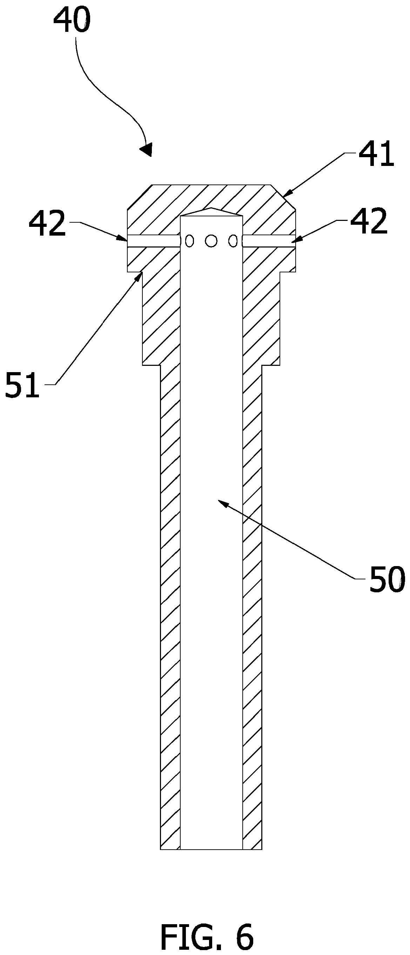

Figure 6 is a sectional view of a detail of the cooking oven according to the invention.

### Embodiments of the Invention

The oven comprises:
- a cooking chamber 1 having one openable side 2 to allow the access to the cooking chamber itself;
- burner means 13 of a first combustible fluid F₁ and substantially aeriform and of a second comburent fluid F₂ and substantially aeriform, the burner means 13 being connected to the cooking chamber 1. The first combustible fluid F₁ is, e.g., methane or other gaseous fuel, while the second comburent fluid F₂ is, e.g., air;
- heat exchange means 3 arranged inside the cooking chamber 1 and connected to the burner means 13 for the heating of the cooking chamber itself.

According to the invention, the burner means 13 comprise a burner 16 of the non-premixed type.

In the present context, by the term "non-premixed" is meant the particular category of burners in which the first combustible fluid F₁ is taken from a relative conduit without mixing it with the second comburent fluid F₂, the union between the first combustible fluid F₁ and the second comburent fluid F₂ taking place at the time of the formation of the flame.

According to the invention, the burner means 13 also comprise:
- a fan element 14 adapted to move the second comburent fluid F₂;
- a first duct 15, connected to the fan element 14 and in which the second comburent fluid F₂ circulates, the first duct 15 comprising a first hole 21 inside which is secured a first pressure transducer 20 for the second comburent fluid F₂;
- at least one flame ignition device 17, revealing the presence of the flame itself, due to the combustion between the first combustible fluid F₁ and the second comburent fluid F₂. Preferably, the ignition device 17 is of the type of an electrode;
- a second duct 18, of the type of a feeding pipe, isolated from the first duct 15, in which the first combustible fluid F₁ circulates, the second duct 18 comprising a second hole 23 inside which is secured a second pressure transducer 22 for the first combustible fluid F₁;
- adjusting means 19 of the first combustible fluid F₁ comprising blocking and safety solenoid valves which adjust the delivery of the first combustible fluid F₁.

According to the invention, the burner 16 comprises:
- a first injector body 40 substantially hollow, and preferably made of a metal material, comprising a passage channel 50 connected to the second duct 18 of the first combustible fluid F₁, the first injector body 40 comprising a plurality of passage holes 42 connected to the passage channel 50 adapted to dispense the first combustible fluid F₁. More in detail, the passage holes 42 are radially arranged along the lateral surface of the first injector body 40 and have an axis preferably perpendicular to the axis of the first body itself;
- a second body 46 substantially hollow associated on top of the first injector body 40 and adapted to define a mixing area 45 wherein the first part of combustion takes place between the first combustible fluid F₁ and the second comburent fluid F₂. Preferably, the second body 46 is substantially made of a metal material; and
- a recirculation element 43 of the second comburent fluid F₂ arranged in the proximity of the passage holes 42.

In the preferred embodiment, the first duct 15 is associated with the second body 46 to define the extension of the second body itself for the channeling of the second comburent fluid F₂ at the recirculation element 43.

Alternative embodiments cannot however be ruled out for the connection between the burner 16 and the first duct 15 provided that the mixing between the first combustible fluid F₁ and the second comburent fluid F₂ does not occur prior to the ignition of the flame and the second comburent fluid itself reaches the recirculation element 43.

Preferably, the recirculation element 43 is of the type of a "swirler" preferably made of a metal material and has a substantially cylindrical conformation along an extension axis.

The recirculation element 43 comprises a plurality of grooves 44 of preferably square, rectangular or circular shape which extend substantially inclined with respect to the extension axis, inside which the second comburent fluid F₂ flows. Advantageously, the angle of inclination of the grooves 44 defines the particular swirling/spiral motion of the flame generated by the combustion between the first combustible fluid F₁ and the second comburent fluid F₂.

The first injector body 40 has a substantially cylindrical and elongated conformation and comprises an end portion 41 arranged in the proximity of the mixing area 45, at which the combustion takes place between the first combustible fluid F₁ and the second comburent fluid F₂, the passage holes 42 being arranged in the proximity of the end portion 41.

Conveniently, the end portion 41 has a substantially frusto-conical conformation such as to promote adherence to the flame at the end portion itself and avoid the phenomenon of "flame detachment".

The first injector body 40 comprises a first abutment surface 51 adapted to define a substantially airtight coupling with the recirculation element 43 which, in more detail, is arranged substantially in abutment against the first injector body 40 at the abutment surface itself.

The recirculation element 43 comprises at least a through hole 49 adapted to contain the first injector body 40, the through hole 49 being substantially coaxial to the first injector body 40 and to the extension axis.

In the preferred embodiment, the second body 46 comprises a flanged element 47, arranged on the outer surface of the second body itself, which allows the coupling of the burner 16 to the cooking chamber 1 and to the heat exchange means 3.

An alternative embodiment cannot however be ruled out in which the cooking chamber 1 comprises coupling means arranged at the connection between the burner 16 and the heat exchange means 3.

In addition, the second body 46 comprises an abutment edge 48, arranged on the inner surface of the second body itself, adapted to define a coupling between the recirculation element 43 arranged in abutment with the second body itself.

The heat exchange means 3 comprise a tubular element 25, 26, 27 preferably made of stainless steel of the austenitic type and having a substantially spiral conformation.

More in detail, the tubular element 25, 26, 27 has a first circle 25, a second circle 26 and a third circle 27 concentric with each other and arranged in sequence.

Conveniently, the tubular element 25, 26, 27 is associated with the cooking chamber 1 by means of suitable securing brackets 28, through which the possible expansion due to heating of the tubular element itself is offset and the spiral configuration thereof is maintained.

The tubular element 25, 26, 27 comprises a first section 24 substantially elongated and connected to the first circle 25 and a second section 5 substantially elongated and rectilinear connected to the third circle 27 and exiting from the cooking chamber 1.

The circles 25, 26, 27 are slightly spaced from each other and, in particular, the first section 24 has a substantially conical and open shape and is connected to the burner means 13, while the second section 5 has a passage opening 29 adapted to eliminate the combustion products of the first combustible fluid F₁ and of the second comburent fluid F₂.

The circles 25, 26, 27 are slightly spaced from each other and, in particular, between the first section 24 and the first circle 25 is a first space 33, between the first circle 25 and the second circle 26 is a second space 32 and between the second circle 26 and the third circle 27 is a third space 52.

The heat exchange means 3 comprise a fan 30 which has a plurality of blades 31 and is arranged in the proximity of the tubular element 25, 26, 27 in a position substantially concentric to the tubular element itself for the distribution of air inside the cooking chamber 1.

Conveniently, the heat exchange means 3 comprise an electric motor 34 operatively connected to the fan 30 for the rotation of the fan itself around an axis of rotation, the electric motor 34 being arranged outside the cooking chamber 1.

In more detail, the motor 34 has a shaft 35 inserted in a bushing 36 associated with the inner surface of the cooking chamber 1 and by means of the rotation of the shaft 35 the fan 30 can rotate, preferably, in a clockwise or counterclockwise direction.

The fan 30 is adapted to heat the atmosphere of the cooking chamber 1 and to keep the air moving inside the cooking chamber itself.

In more detail, the air circulates around the heat exchange means 3 and also through the spaces 31, 32, 33.

It cannot be ruled out that the cooking chamber 1 comprises a deflector element which divides the cooking chamber itself into a heat exchange area and a cooking area inside which, by means of the same, hot air and/or steam are distributed more evenly.

According to the invention, the oven comprises water dispensing means 9 arranged inside the cooking chamber 1 and comprising an outlet opening 10 adapted to pour water on the heat exchange means 3.

In more detail, the dispensing means 9 are of the type of a tube 37 having a first ending part 38, connected to the water mains, and a second ending part 39.

The second ending part 39 has the outlet opening 10 through which the water is conveyed at the heat exchange means 3 at a certain temperature and in the cooking chamber 1 by generating steam in a direct form.

Or the oven comprises steam generating means arranged outside the cooking chamber 1 and connected to the water means (not shown in the illustrations).

Conveniently, the steam generating means comprise a conduit for conveying the steam inside the cooking chamber 1.

Preferably, the conveying conduit is adapted to convey steam at the heat exchange means 3.

In more detail, the steam generating means, or boiler, allow converting water from liquid to aeriform state by means of, e.g., an exchanger of the dipping type.

Preferably, this exchanger is heated by means of the high temperature flue gases generated by a burner 16 of the non-premixed type as previously described. The generated steam is conveyed into the cooking chamber 1 at the heat exchange means 3 to facilitate the cooking processes.

An alternative embodiment cannot be ruled out in which the oven has both water dispensing means 9 and steam generating means which operate alternately or simultaneously, depending on the cooking requirements, to obtain a greater amount of steam inside the cooking chamber 1.

It cannot however be ruled out that the cooking chamber 1 has at least an upper opening 11, arranged at the top wall of the cooking chamber itself for the discharge of the excess fumes during cooking, and a lower opening 12 arranged at the bottom wall of the cooking chamber itself for the discharge of condensate or water used for washing.

It cannot also be ruled out that the oven comprises a command unit for the oven operation, operatively connected to the first pressure transducer 20, to the second pressure transducer 22, to the adjusting means 19 and to the fan element 14.

Preferably, the command unit is of the type of a controller with microprocessor which receives the electrical signals from the first pressure transducer 20 and from the second pressure transducer 22.

This controller processes the electrical signals by means of a suitable PID ("Proportional - Integral - Derivative") algorithm and calculates the power of the burner 16.

Advantageously, the command unit operates on the power of the burner 16 by means of the adjusting means 19 by correcting the flow rate of the first combustible fluid F₁.

Furthermore, the command unit is operatively connected to a control device, of the type of an inverter, adapted to correct the flow rate of the second comburent fluid F₂.

It has in practice been ascertained that the described invention achieves the intended objects and in particular the fact is underlined that the oven thus made allows reducing the size and overall dimensions compared to the ovens of known type.

In particular, the use of a non-premixed burner allows avoiding the use of a mixing device upstream of the burner and maintaining the CO and NOx emissions low with steady emissions and flame at all operating powers.

It is emphasized that the use of the non-premixed burner facilitates the separation of the first combustible fluid and of the second comburent fluid until the formation of the flame thus preventing potentially dangerous explosive mixtures from forming.

Furthermore, this non-premixed burner allows generating a flame of great power that remains stably lit in small volumes of air.

This oven allows using great heating powers that allow achieving the temperature set-point in very short times; this advantage results in a significant reduction in consumption, increased production capacity of the oven and, last but not least, a better environmental impact than the gas appliances of known type.

## Claims

1. Oven, comprising:
- at least one cooking chamber (1);
- burner means (13) of at least one first combustible fluid (F₁) and substantially aeriform and of at least one second comburent fluid (F₂) and substantially aeriform, said burner means (13) being connected to said cooking chamber (1) and comprising:
- at least one burner (16) of the non-premixed type;
- at least one fan element (14) for the movement of said second comburent fluid (F₂);
- at least one first duct (15), connected to said fan element (14), in which said second comburent fluid (F₂) circulates;
- at least one flame ignition device (17), and revealing the presence of the flame itself, due to the combustion between the first combustible fluid (F₁) and the second comburent fluid (F₂);
- at least one second duct (18) in which said first combustible fluid (F₁) circulates; and
- adjusting means (19) of said first combustible fluid (F₁);
- heat exchange means (3) arranged inside said cooking chamber (1) and connected to said burner means (13) for the heating of said cooking chamber (1);
**characterized in that** said burner (16) comprises:
- at least one first injector body (40) substantially hollow comprising a passage channel (50) connected to said second duct (18), said first injector body (40) comprising a plurality of passage holes (42) connected to said passage channel (50) and suitable for the dispensing of said first combustible fluid (F₁);
- at least one second body (46) substantially hollow associated on top of said first injector body (40) and able to define a mixing area (45) of said first combustible fluid (F₁) and of said second comburent fluid (F₂); and
- at least one recirculation element (43) of said second comburent fluid (F₂) arranged in the proximity of said passage holes (42), said recirculation element (43) comprising a plurality of grooves (44) inside which said second comburent fluid (F₂) flows; and
wherein said oven further comprises at least one of:
- water dispensing means (9) arranged inside said cooking chamber (1), said dispensing means (9) comprising at least one outlet opening (10) for pouring water on said heat exchange means (3);
- steam generating means arranged outside said cooking chamber (1), said steam generating means comprising at least one conduit for conveying the steam inside said cooking chamber (1).

2. Oven according to claim 1, **characterized in that** said first injector body (40) has a substantially cylindrical and elongated conformation and comprises an end portion (41) arranged in the proximity of said mixing area (45), at which the combustion takes place between said first combustible fluid (F₁) and said second comburent fluid (F₂), said passage holes (42) being arranged in the proximity of said end portion (41).

3. Oven according to one or more of the preceding claims, **characterized in that** said first injector body (40) comprises at least one abutment surface (51) able to define a substantially airtight coupling with said recirculation element (43), said recirculation element (43) being arranged substantially in abutment with said first injector body (40) at said abutment surface (51).

4. Oven according to one or more of the preceding claims, **characterized in that** said recirculation element (43) has a substantially cylindrical conformation and comprises at least one through hole (49) able to contain said first injector body (40), said through hole (49) being substantially coaxial to said first injector body (40).

5. Oven according to one or more of the preceding claims, **characterized in that** said heat exchange means (3) comprise at least one tubular element (25, 26, 27) having a substantially spiral conformation.

6. Oven according to one or more of the preceding claims, **characterized in that** said tubular element (25, 26, 27) comprises a first section (24), having a substantially conical conformation and connected to said burner means (13), and a second section (5) substantially elongated and rectilinear exiting from said cooking chamber (1).

7. Oven according to one or more of the preceding claims, **characterized in that** said heat exchange means (3) comprise at least one fan (30) arranged in the proximity of said tubular element (25, 26, 27) and substantially coaxial to it, said fan (30) being suitable for the distribution of air inside said cooking chamber (1).

8. Oven according to one or more of the preceding claims, **characterized in that** said heat exchange means (3) comprise at least one electric motor (34) operatively connected to said fan (30) for the rotation of said fan (30) around an axis of rotation, said electric motor (34) being arranged outside said cooking chamber (1).

9. Oven according to one or more of the preceding claims, **characterized in that**:
- said first duct (15) comprises at least one first pressure transducer (20) of said second comburent fluid (F₂); and
- said second duct (18) comprises at least one second pressure transducer (22) of said first combustible fluid (F₁).

10. Oven according to one or more of the preceding claims, **characterized in that** it comprises at least one command unit for the oven operation operatively connected to at least one of said first pressure transducer, second pressure transducer, adjusting means and fan element (20, 22, 19, 14).

## Patentansprüche

1. Ofen, umfassend:
- mindestens eine Kochkammer (1);
- Brennermittel (13) aus mindestens einem ersten brennbaren Fluid (F₁) und im Wesentlichen gasförmig und aus mindestens einem zweiten verbrennbaren Fluid (F₂) und im Wesentlichen gasförmig, wobei die Brennermittel (13) mit der Kochkammer (1) verbunden sind und umfassen:
- mindestens einen Brenner (16) des nicht vorgemischten Typs;
- mindestens ein Fächerelement (14) für die Bewegung des zweiten verbrennbaren Fluids (F₂);
- mindestens einen ersten Kanal (15), der mit dem Fächerelement (14) verbunden ist und in dem das zweite verbrennbare Fluid (F₂) zirkuliert;
- mindestens eine Flammenzündvorrichtung (17), und die das Vorhandensein der Flamme selbst offenbart aufgrund der Verbrennung zwischen dem ersten brennbaren Fluid (F₁) und dem zweiten verbrennbaren Fluid (F₂);
- mindestens einen zweiten Kanal (18), in dem das erste brennbare Fluid (F₁) zirkuliert; und
- Einstellmittel (19) von der ersten brennbaren Flüssigkeit (F₁);
- Wärmeaustauschmittel (3), die innerhalb der Kochkammer (1) angeordnet sind und verbunden sind mit den Brennermitteln (13) zur Beheizung der Kochkammer (1);
**dadurch gekennzeichnet, dass** der Brenner (16) umfasst:
- mindestens einen ersten Injektorkörper (40), der im Wesentlichen hohl ist und einen Durchgangskanal (50) aufweist, der mit dem zweiten Kanal (18) verbunden ist, wobei der erste Injektorkörper (40) eine Vielzahl von Durchgangslöchern (42) aufweist, die mit dem Durchgangskanal (50) verbunden sind und für die Abgabe des ersten brennbaren Fluids (F₁) geeignet sind;
- mindestens einen zweiten Körper (46), der im Wesentlichen hohl ist, der oben auf dem ersten Injektorkörper (40) angeordnet ist und in der Lage ist, einen Mischbereich (45) des ersten brennbaren Fluids (F₁) und des zweiten verbrennbaren Fluids (F₂) zu definieren; und
- mindestens ein Rezirkulationselement (43) für das zweite verbrennbare Fluid (F₂), das in der Nähe der Durchgangslöcher (42) angeordnet ist, wobei das Rezirkulationselement (43) eine Vielzahl von Nuten (44) aufweist, in denen das zweite verbrennbare Fluid (F₂) fließt; und
wobei der Ofen ferner mindestens eines der folgenden Elemente umfasst:
- Wasserabgabemittel (9), die im Inneren der Kochkammer (1) angeordnet sind, wobei die Abgabemittel (9) mindestens eine Auslassöffnung (10) zum Gießen von Wasser auf die Wärmeaustauschmittel (3) aufweisen;
- Dampferzeugungsmittel, die außerhalb der Kochkammer (1) angeordnet sind, wobei die Dampferzeugungsmittel mindestens eine Leitung zur Beförderung des Dampfes innerhalb der Kochkammer (1) umfassen.

2. Ofen nach Anspruch 1, **dadurch gekennzeichnet, dass** der erste Injektorkörper (40) eine im Wesentlichen zylindrische und längliche Form aufweist und einen Endabschnitt (41) umfasst, der in der Nähe des Mischbereichs (45) angeordnet ist, in dem die Verbrennung zwischen dem ersten brennbaren Fluid (F₁) und dem zweiten verbrennbaren Fluid (F₂) stattfindet, wobei die Durchgangslöcher (42) in der Nähe des Endabschnitts (41) angeordnet sind.

3. Ofen nach einem oder mehreren der vorhergehenden Ansprüche, **dadurch gekennzeichnet, dass** der erste Injektorkörper (40) mindestens eine Anschlagfläche (51) aufweist, die in der Lage ist, eine im Wesentlichen luftdichte Kopplung mit dem Rezirkulationselement (43) zu definieren, wobei das Rezirkulationselement (43) im Wesentlichen in Anschlag mit dem ersten Injektorkörper (40) an der Anschlagfläche (51) angeordnet ist.

4. Ofen nach einem oder mehreren der vorhergehenden Ansprüche, **dadurch gekennzeichnet, dass** das Rezirkulationselement (43) eine im Wesentlichen zylindrische Gestalt hat und mindestens ein Durchgangsloch (49) aufweist, das in der Lage ist, den ersten Injektorkörper (40) aufzunehmen, wobei das Durchgangsloch (49) im Wesentlichen koaxial zum ersten Injektorkörper (40) ist.

5. Ofen nach einem oder mehreren der vorhergehenden Ansprüche, **dadurch gekennzeichnet, dass** die Wärmeaustauschmittel (3) mindestens ein rohrförmiges Element (25, 26, 27) mit einer im Wesentlichen spiralförmigen Gestalt umfassen.

6. Ofen nach einem oder mehreren der vorhergehenden Ansprüche, **dadurch gekennzeichnet, dass** das rohrförmige Element (25, 26, 27) einen ersten Abschnitt (24) umfasst, der eine im Wesentlichen konische Gestalt hat und mit den Brennermitteln (13) verbunden ist, und einen zweiten Abschnitt (5), der im Wesentlichen länglich und geradlinig aus der Kochkammer (1) austritt.

7. Ofen nach einem oder mehreren der vorhergehenden Ansprüche, **dadurch gekennzeichnet, dass** die Wärmeaustauschmittel (3) mindestens einen Fächer (30) umfassen, der in der Nähe des rohrförmigen Elements (25, 26, 27) und im Wesentlichen koaxial zu diesem angeordnet ist, wobei der Fächer (30) zur Verteilung von Luft im Inneren der Kochkammer (1) geeignet ist.

8. Ofen nach einem oder mehreren der vorhergehenden Ansprüche, **dadurch gekennzeichnet, dass** die Wärmeaustauschmittel (3) mindestens einen Elektromotor (34) umfassen, der mit dem Fächer (30) zur Drehung des Fächers (30) um eine Drehachse betriebsmäßig verbunden ist, wobei der Elektromotor (34) außerhalb der Kochkammer (1) angeordnet ist.

9. Ofen nach einem oder mehreren der vorhergehenden Ansprüche, **dadurch gekennzeichnet, dass**
- der erste Kanal (15) mindestens einen ersten Druckwandler (20) des zweiten verbrennbaren Fluids (F₂) umfasst; und
- der zweite Kanal (18) mindestens einen zweiten Druckwandler (22) des ersten brennbaren Fluids (F₁) umfasst.

10. Ofen nach einem oder mehreren der vorhergehenden Ansprüche, **dadurch gekennzeichnet, dass** er mindestens eine Befehlseinheit für den Ofenbetrieb umfasst, die betriebsmäßig mit mindestens einem aus der Gruppe verbunden ist, umfassend den ersten Druckwandler, den zweiten Druckwandler, die Einstellmittel und das Fächerelement (20, 22, 19, 14).

## Revendications

1. Four, comprenant :
- au moins une chambre de cuisson (1) ;
- des moyens brûleurs (13) d'au moins un premier fluide combustible (F₁) et sensiblement aériforme et d'au moins un second fluide comburant (F₂) et sensiblement aériforme, lesdits moyens brûleurs (13) étant reliés à ladite chambre de cuisson (1) et comprenant :
- au moins un brûleur (16) du type non prémélangé ;
- au moins un élément ventilateur (14) pour le déplacement dudit second fluide comburant (F₂) ;
- au moins un premier conduit (15), relié audit élément ventilateur (14), dans lequel ledit second fluide comburant (F₂) circule ;
- au moins un dispositif d'allumage de flamme (17), et révélant la présence de la flamme elle-même, en raison de la combustion entre le premier fluide combustible (F₁) et le second fluide comburant (F₂) ;
- au moins un second conduit (18) dans lequel ledit premier fluide combustible (F₁) circule ; et
- des moyens d'ajustement (19) dudit premier fluide combustible (F₁) ;
- des moyens d'échange de chaleur (3) agencés à l'intérieur de ladite chambre de cuisson (1) et reliés auxdits moyens brûleurs (13) pour le chauffage de ladite chambre de cuisson (1) ;
**caractérisé en ce que** ledit brûleur (16) comprend :
- au moins un premier corps d'injecteur (40) sensiblement creux comprenant un canal de passage (50) relié audit second conduit (18), ledit premier corps d'injecteur (40) comprenant une pluralité de trous de passage (42) reliés audit canal de passage (50) et appropriés pour la fourniture dudit premier fluide combustible (F₁) ;
- au moins un second corps (46) sensiblement creux associé sur le dessus dudit premier corps d'injecteur (40) et pouvant définir une zone de mélange (45) dudit premier fluide combustible (F₁) et dudit second fluide comburant (F₂) ; et
- au moins un élément de recirculation (43) dudit second fluide comburant (F₂) agencé à proximité desdits trous de passage (42), ledit élément de recirculation (43) comprenant une pluralité de rainures (44) à l'intérieur desquelles ledit second fluide comburant (F₂) s'écoule ; et
dans lequel ledit four comprend en outre au moins un parmi :
- des moyens de fourniture (9) d'eau agencés à l'intérieur de ladite chambre de cuisson (1), lesdits moyens de fourniture (9) comprenant au moins une ouverture de sortie (10) permettant de déverser de l'eau sur lesdits moyens d'échange de chaleur (3) ;
- des moyens de génération de vapeur agencés à l'extérieur de ladite chambre de cuisson (1), lesdits moyens de génération de vapeur comprenant au moins une conduite permettant d'acheminer la vapeur à l'intérieur de ladite chambre de cuisson (1).

2. Four selon la revendication 1, **caractérisé en ce que** ledit premier corps d'injecteur (40) a une conformation sensiblement cylindrique et allongée et comprend une partie d'extrémité (41) agencée à proximité de ladite zone de mélange (45), au niveau de laquelle la combustion a lieu entre ledit premier fluide combustible (F₁) et ledit second fluide comburant (F₂), lesdits trous de passage (42) étant agencés à proximité de ladite partie d'extrémité (41).

3. Four selon une ou plusieurs des revendications précédentes, **caractérisé en ce que** ledit premier corps d'injecteur (40) comprend au moins une surface de butée (51) pouvant définir un accouplement sensiblement étanche à l'air avec ledit élément de recirculation (43), ledit élément de recirculation (43) étant agencé sensiblement en butée avec ledit premier corps d'injecteur (40) au niveau de ladite surface de butée (51).

4. Four selon une ou plusieurs des revendications précédentes, **caractérisé en ce que** ledit élément de recirculation (43) a une conformation sensiblement cylindrique et comprend au moins un trou débouchant (49) pouvant contenir ledit premier corps d'injecteur (40), ledit trou débouchant (49) étant sensiblement coaxial avec ledit premier corps d'injecteur (40).

5. Four selon une ou plusieurs des revendications précédentes, **caractérisé en ce que** lesdits moyens d'échange de chaleur (3) comprennent au moins un élément tubulaire (25, 26, 27) ayant une conformation sensiblement en spirale.

6. Four selon une ou plusieurs des revendications précédentes, **caractérisé en ce que** ledit élément tubulaire (25, 26, 27) comprend une première section (24), ayant une conformation sensiblement conique et reliée auxdits moyens brûleurs (13), et une seconde section (5) sensiblement allongée et rectiligne sortant de ladite chambre de cuisson (1).

7. Four selon une ou plusieurs des revendications précédentes, **caractérisé en ce que** lesdits moyens d'échange de chaleur (3) comprennent au moins un ventilateur (30) agencé à proximité dudit élément tubulaire (25, 26, 27) et sensiblement coaxial avec lui, ledit ventilateur (30) étant approprié pour la distribution d'air à l'intérieur de ladite chambre de cuisson (1).

8. Four selon une ou plusieurs des revendications précédentes, **caractérisé en ce que** lesdits moyens d'échange de chaleur (3) comprennent au moins un moteur électrique (34) relié de manière fonctionnelle audit ventilateur (30) pour la rotation dudit ventilateur (30) autour d'un axe de rotation, ledit moteur électrique (34) étant agencé à l'extérieur de ladite chambre de cuisson (1).

9. Four selon une ou plusieurs des revendications précédentes, **caractérisé en ce que** :
- ledit premier conduit (15) comprend au moins un premier transducteur de pression (20) dudit second fluide comburant (F₂) ; et
- ledit second conduit (18) comprend au moins un second transducteur de pression (22) dudit premier fluide combustible (F₁).

10. Four selon une ou plusieurs des revendications précédentes, **caractérisé en ce qu'**il comprend au moins une unité de commande pour le fonctionnement de four reliée de manière fonctionnelle à au moins un parmi lesdits premier transducteur de pression, second transducteur de pression, moyens d'ajustement et élément ventilateur (20, 22, 19, 14).
